Europäisches Patentamt

(19) European Patent Office

Office européen des brevets

(11) **EP 0 692 939 B1**

(12) **EUROPEAN PATENT SPECIFICATION**

(45) Date of publication and mention
of the grant of the patent:
**07.01.1999 Bulletin 1999/01**

(21) Application number: **94912376.4**

(22) Date of filing: **31.03.1994**

(51) Int. Cl.$^6$: **A23L 1/217**, A23D 9/00

(86) International application number:
**PCT/US94/03553**

(87) International publication number:
**WO 94/23592** (27.10.1994 Gazette 1994/24)

(54) **REDUCED CALORIE POTATO CHIPS OBTAINED BY FRYING RAW POTATO SLICES IN A REDUCED CALORIE FAT COMPOSITION AND REMOVING A PORTION OF SAID FAT COMPOSITION FROM THE CHIPS**

KALORIEARME KARTOFFELCHIPS DURCH FRITTIEREN VON ROHEN KARTOFFELSCHEIBEN IN EINER KALORIEARME FETTZUSAMMENSETZUNG UND ENTFERNUNG EINES PORTION DES FETTES VON DIE CHIPS

CHIPS A TENEUR DIMINUEE EN CALORIES OBTENUES EN FAISANT FRIRE DES TRANCHES DE POMMES DE TERRE CRUES DANS UNE COMPOSITION DE MATIERE GRASSE A TENEUR DIMINUEE EN CALORIES ET EN ELIMINANT UNE PORTION DE LADITE COMPOSITION DE MATIERE GRASSE DES CHIPS

(84) Designated Contracting States:
**AT BE CH DE DK ES FR GB GR IE IT LI LU NL PT SE**

(30) Priority: **08.04.1993 US 45448**

(43) Date of publication of application:
**24.01.1996 Bulletin 1996/04**

(73) Proprietor:
**THE PROCTER & GAMBLE COMPANY
Cincinnati, Ohio 45202 (US)**

(72) Inventors:
• **CONTI-STOLZ, Charissa, Ann
Cincinnati, OH 45212 (US)**

• **KESTER, Jeffrey, John
West Chester, OH 45069 (US)**
• **JOHNSTON, Robert, William
Ashiya, Hyogo 659 (JP)**
• **ELSEN, Joseph, James
Cincinnati, OH 45211 (US)**

(74) Representative:
**Engisch, Gautier et al
Procter & Gamble
European Technical Center N.V.
Temselaan 100
1853 Strombeek-Bever (BE)**

(56) References cited:
**WO-A-90/08480        WO-A-91/15964
WO-A-93/00823        WO-A-93/04599**

## Description

TECHNICAL FIELD

The present invention relates to a process for preparing conventional potato chips which contain a reduced calorie fat composition, but which, nevertheless do not impart an undesirable sensation of greasiness upon mastication and which have acceptable lubriciousness in the mouth. The present invention further relates to potato chips prepared according to the process of this invention.

BACKGROUND OF THE INVENTION

Salted snacks such as potato chips are particularly popular consumer snack products. Conventional potato chips are typically prepared by cutting whole potatoes into potato slices and then immersing the potato slices in a frying fat or oil medium that has been heated to temperatures of approximately 300° to 400°F (148.9° to 204.4°C).

The potato slices can be immersed in this hot frying medium for varying lengths of time, typically on the order of from about 45 seconds to about 3 minutes, 30 seconds. While immersed, the slices absorb a substantial quantity of the frying fat or oil, generally on the order of from about 35% to about 50% by weight of the finished potato chip. Typically, the frying medium comprises soybean oil, cottonseed oil or peanut oil. Accordingly, since this frying fat or oil comprises almost exclusively triglycerides, this imparts a significant caloric content (about 9 calories per gram of oil absorbed) to the potato slices fried in such mediums. WO 90/08480 discloses a process for producing potato chip products having less than 25% weight oil based on the total weight of an unseasoned chip; the process requiring paryfrying potato slices, deoiling and partially dehydrating the slices with superheated steam and then further dehydrating the slices.

Certain polyol fatty acid polyesters have been suggested as low calorie substitutes for these triglyceride fats and oils. For example, Mattson et al; U.S. Patent 3,600,186; Issued August 17, 1971, discloses low calorie food compositions in which at least a portion of the fat content of a fat-containing food is provided by a nonabsorbable, concentration. Frequently such solid particulate material, which serves as a passive oil loss control agent, will be a solid polyol polyester which crystallizes into the desired especially small particles. Examples of solid oil loss particles of this type are the diversely esterified polyol polyesters described in Letton; European Patent Application 311,154; Published April 12, 1989. Use of diversely esterified polyol polyester oil loss control agents of this type in preparing reduced calorie salted snack products such as potato chips is described in Young; U.S. Patent 5,085,884; Issued February 4, 1992.

WO 91/15964 discloses fat compositions useful in preparing reduced calorie potato chips and other low moisture fat-containing products having less waxiness and improved flavor-display. These benefits are obtained by applying to the surface of the food, fat compositions having certain thixotropic areas that correlate to reduced waxiness impressions. These fat compositions comprise a non-digestible oil, optionally a digestible triglyceride fat or oil and preferably low levels of certain solid polyol fatty acid polyesters to control or prevent passive oil loss. WO 93/04599 teaches that the addition of hydrophobic silicas to a non-digestible oil not only prevents passive oil loss but also provides a clean oil.

Mixtures of specific liquid and solid polyol fatty acid polyesters described in WO 93/00823 exhibit a favourable rheology and/or flavourable anti-anal leakage properties, and/or improved mouthfeel.

Notwithstanding the improved oil loss control and mouth feel benefits provided by such prior art nondigestible fat compositions, potato chips that have been fried in frying fats containing substantial levels of these materials and which contain the same fat levels as potato chips fried in a triglyceride oil (e.g., 35% to 50%) can impart an undesirable sensation of greasiness when masticated. (In terms of organoleptic properties, "greasiness" is described as a vaseline-like coating in the mouth.)

Accordingly, it would be desirable to have some means for providing potato chips which contain a reduced calorie fat composition to realize caloric benefits, while still maintaining the desirable (e.g. nongreasy and nonwaxy) taste of potato chips fried in a triglyceride fat or oil.

SUMMARY OF THE INVENTION

The present invention relates to a process for preparing conventional potato chips which contain a reduced calorie fat composition but which nevertheless do not impart an undesirable sensation of greasiness or waxiness when chewed and which have desirable lubriciousness.

Such a process comprises the steps of I) frying raw potato slices to a moisture content of from about 2% to about 20% under conditions suitable to incorporate into the potato slices a reduced calorie fat composition having a Waxy/Greasy Thixotropic Area Value ranging from about 25 kilopascals/second (kPa/s) to about 150 kPa/s, and 2) removing an amount of the reduced calorie fat composition from the surface of the fried potato slices so that the finished potato chip has a fat content ranging from about 23% to about 32%.

The reduced calorie fat composition which is utilized in the process of the present invention contains from about 70% to 100% of a nondigestlble fat component and from 0% to about 30% of a conventional triglyceride fat or oil component. The nondigestible fat component of the reduced calorie fat composition comprises a blend of a liquid nondigestible oil and particles of nondigestible solid polyol polyester. The solid particles have a thickness of 1 micron or less and are dispersed in the liquid nondigestible oil in an amount sufficient to control passive oil loss upon ingestion of the liquid nondigestible oil. The nondigestible fat component furthermore has a Solid Fat Content profile slope between 21.1°C (70°F) and 37°C (98.6°F) of from 0 to -1.26 %solids/°C (0 to -0.75 %solids/°F).

The present invention also relates to potato chips prepared according to the process of the present invention.

DETAILED DESCRIPTION OF THE INVENTION

The materials used in the process of the present invention, as well as the steps of the process, are described in detail as follows:

I. Process Materials

The materials used in the process of the present invention include the potato slices which are fried to form the resulting potato chips and the reduced calorie fat compositions which can be used as the frying medium and which are incorporated into such potato chips.

A. Potato Slices

The potato chips that are prepared according to the present invention must, of course, be fashioned from sliced raw potatoes as a starting material. This results in the realization of "conventional" potato chips. For purposes of this invention "conventional" potato chips are those that are prepared only from raw potato slices. "Conventional" potato chips do not include fabricated chips such as those prepared from potato-based dough material.

To prepare the potato slices used in the process herein, raw potatoes are sorted by size and the outer peel is generally removed. The potatoes should be 2-5 inches (5.1-12.7 centimeters) in diameter to ensure uniform frying. The peeled potatoes are then sliced to the desired thickness using standard slicing equipment, such as an ER Knott Machine Co., Inc. Model 108-21SA two blade rotary slicer. Typically, the potatoes are sliced to a thickness ranging from 0.050 inches (1.27 millimeters) to 0.070 inches (1.77 millimeters). The sliced potatoes are washed to remove excess starch and then the excess water is removed from the surface of the potato slices. At this point, the potato slices have a moisture content of approximately 80% and a fat content of less than about 0.2% and can be subjected to the chip preparation process as described more fully hereinafter.

B. Reduced Calorie Fat Compositions

Another essential material used in the potato chip preparation process herein comprises the reduced calorie fat compositions which can be used as the frying medium in the process herein. Such reduced calorie fat compositions contain a nondigestible fat component and optionally a conventional triglyceride oil or fat component. The reduced calorie fat composition must have certain specific rheological characteristics as hereinafter more fully described.

1. Nondigestible Fat Component

The reduced calorie fat compositions used as a frying medium herein must contain a nondigestible fat component which comprises a blend of a liquid nondigestible oil and particles of solid nondigestible polyol polyester dispersed in the liquid nondigestible oil. Such a blend should have a relatively flat Solid Fat Content (SFC) profile slope across the range of temperatures between room temperature and body temperature. The liquid nondigestible oil and the particles of solid polyol polyester are described in detail as follows:

a) Nondigestible Liquid Oil

A key component of the nondigestible fat component is a liquid nondigestible oil. For purposes of this invention a liquid nondigestible oil is one which has a complete melting point below about 37°C. Suitable liquid nondigestible edible oils for use herein include liquid polyol fatty acid polyesters (see Jandacek; U.S. Patent 4,005,195; Issued January 25, 1977); liquid esters of tricarballylic acids (see Hamm; U.S. Patent 4,508,746; Issued April 2, 1985); liquid diesters of dicarboxylic acids such as derivatives of malonic and succinic acid (see Fulcher; U.S. Patent 4,582,927; Issued April 15, 1986); liquid triglycerides of alpha-branched chain carboxylic acids (see Whyte; U.S. Patent 3,579,548; Issued May 18, 1971); liquid ethers and ether esters containing the neopentyl moiety (see Minich; U.S. Patent 2,962,419; Issued November 29, 1960); liquid fatty polyethers of polyglycerol (See Hunter et al; U.S. Patent 3,932,532; Issued January 13, 1976); liquid alkyl glycoside fatty acid polyesters (see Meyer et al; U.S. Patent 4,840,815; Issued June 20, 1989); liquid polyesters of two ether linked hydroxypolycarboxylic acids (e.g., citric or isocitric acid) (see Huhn et al; U.S. Patent 4,888,195; Issued December 19, 1988); liquid esters of epoxide-extended polyols (see White et al; U.S. Patent 4,861,613; Issued August 29, 1989); all of which are incorporated herein by reference, as well as liquid polydimethyl siloxanes (e.g., Fluid Silicones available from Dow Corning)

Preferred liquid nondigestible oils are the liquid polyol fatty acid polyesters that comprise liquid sugar fatty acid polyesters, liquid sugar alcohol fatty acid polyesters, and mixtures thereof. These frequently will be sucrose fatty acid esters.

The liquid polyol fatty acid polyesters suitable for use in the nondigestible fat component can be prepared by a variety of methods known to those skilled in the art. These methods include: transesterification of the polyol (i.e. sugar or sugar alcohol) with methyl, ethyl or glycerol fatty acid esters using a variety of catalysts; acylation of the polyol with a fatty acid chloride; acylation of the polyol with a fatty acid anhydride; and acylation of the polyol with a fatty acid, per se. See, for example, U.S. Patent Nos. 2,831,854, 3,600,186, 3,963,699, 4,517,360 and 4,518,772, all of which are incorporated be reference, which disclose suitable methods for preparing polyol fatty acid polyesters. Specific, but nonlimiting, examples of the preparation of liquid polyol polyesters suitable for use in the practice of the present invention are disclosed in Young et al; World Patent Application US91-02394 (publication number WO91-15964); published October 31, 1991, which is incorporated by reference.

b) Solid Polyol Polyester Particles

Another key component of the nondigestible fat component comprises nondigestible solid particles of certain polyol polyester material that are dispersed in the liquid nondigestible oil to control or prevent passive oil loss. (See, for example, Zimmerman et al; U.S. Application Serial No. 514,795; filed April 26, 1990, which is herein incorporated by reference.) Typically, these nondigestible solid particles are relatively small (e.g., 1 micron or less, preferably 0.1 micron or less, more preferably 0.05 micron or less) and have a complete melting point of above 37°C but below 500°C, preferably above 50°C but below 200°C, more preferably above 60°C but below 100°C. (See Elsen et al; U.S. Patent Application Serial No. 07/969,670; Filed October 30, 1992, which is herein incorporated by reference.)

The solid nondigestible particles dispersed in the nondigestible liquid oil component to provide passive oil loss control can be formed from a wide variety of both organic and inorganic materials. For example, the solid nondigestible particles can be formed from polyol polyesters in which the ester groups are formed from a combination of 1)$C_2$-$C_{12}$ short chain fatty acid radicals, $C_{12}$ or higher unsaturated fatty acid radicals, or a combination thereof, and 2)$C_{20}$ or higher saturated fatty acid radicals (See Jandacek et al, U.S. Patent 4,797,300, Issued January 10, 1989; Jandacek et al, U.S. Patent 5,107,398, Issued May 21, 1991; Letton et al, World Patent Application US91/02272 (publication number WO91-15960), Published October 31, 1991; Letton et al, World Patent Application US91/02388 (publication number WO91/15961), Published October 31, 1991; and Letton, European Patent Application 311,154, Published April, 12, 1989, all of which are herein incorporated by reference). The solid nondigestible particles can also be formed from other diversely esterified polyol polyesters (see Corrigan et al, U.S. Patent Application Serial No. 07/968,780, Filed October 30, 1992 and Corrigan, U.S. Patent Application Serial No. 07/968,792, Filed October 30, 1992); from certain polymer-containing polyol polyesters (see Corrigan et al, U.S. Patent Application Serial No. 07/968,791, Filed October 30, 1992); from certain polyglycerol esters (see Howie, U.S. Patent Application Serial No. 07/968,775, Filed October 30, 1992), or from a cocrystallized blend of polyol polyester hardstock and a crystal modifier (see Johnston et al, U.S. Patent Application Serial No. 07/969,607, Filed October 30, 1992); all of which are herein incorporated by reference.

These solid polyol polyester particles can be made according to prior known methods for preparing polyol polyesters. One such method of preparation is by reacting the acid chlorides or acid anhydrides of the respective fatty acids with sucrose, preferably using a sequential esterification process. See U.S. application Serial No. 417,990, to James C. Letton, filed October 6, 1989 (herein incorporated by reference), which discloses this sequential esterification process.

Another method for preparing these solid polyol polyesters is by the process of reacting the methyl esters of the respective fatty acids with sucrose in the presence of a fatty acid soap and a basic catalyst such as potassium carbonate. See, for example, Rizzi et al, U.S. Patent 3,963,699, Issued June 15, 1976; Volpenhein, U.S. Patent 4,518,772, Issued May 21, 1985; and Volpenhein, U.S. Patent 4,517,360, Issued May 14, 1985, all of which are incorporated by reference. See also Young et al.; World Patent Application US91-02394 (publication number WO91-15964); Published October 31, 1991, which is herein incorporated by reference.

c) Formulation of the Nondigestible Fat Component

The nondigestible fat component of the reduced calorie fat compositions used herein can be formulated by blending together the liquid nondigestible oil and a sufficient amount of the solid polyol polyester particles to control or prevent passive oil loss. What constitutes a "sufficient amount to control or prevent passive oil loss" with regard to the solid polyol polyester particles depends upon the particular solid polyol polyester particles involved, the particular passive oil loss control benefits desired, and the particular greasiness impressions which can be tolerated for foods containing the nondigestible fat.

The nondigestible fat component of the reduced calorie fat composition used in the present invention typically comprises from 80% to 99% liquid nondigestible oil and from 1% to 20% solid polyol polyester particles. Preferably such blends comprise from 85% to 99% liquid nondigestible oil and from 1 to 15% solid polyol polyester particles. More preferably, such blends comprise from 91% to 99% liquid nondigestible oil and from 1% to 9% solid polyol polyester particles.

The nondigestible fat component should furthermore exhibit relatively flat SFC profile slopes across the temperature range of from typical room temperature to body temperature, i.e., from 70°F to 98.6°F. Typically, the SFC profile slope between these temperatures is from 0 to -1.26 %solids/°C (0 to -0.75 %solids/°F), preferably from 0 to -0.5 %solids/°C (0 to -0.3 %solids/°F), and most preferably from 0 to -0.17 %solids/°C (0 to -0.1 %solids/°F). An appropriate method for determining the SFC profile slope of the nondigestible fat component of the compositions used herein is set forth in detail in the Analytical methods section hereinafter.

The nondigestible fat component can also be characterized in terms of its liquid/solid stability which provides an indication of the amount of passive oil loss control which will be provided by the nondigestible fat component. The liquid/solid stability of these liquid/solid blends is typically at least 30%, preferably at least 50%, more preferably at least 60%, and most preferably at least 70%. An appropriate method for determining the liquid/solid stability of the nondigestible fat component of the compositions used herein is also set forth in the Analytical Methods section hereinafter.

2. Conventional Triglyceride Oil or Fat Component

In addition to the nondigestible fat component, the reduced calorie fat compositions used as a frying medium in the present invention can optionally include a conventional digestible triglyceride fat or oil.

As used herein, the term "triglyceride oil" refers to those triglyceride compositions which are fluid or liquid above about 25°C. Although not a requirement, the triglyceride oils useful in the present invention can include those which are fluid or liquid below 25°C. These triglyceride oils consist primarily of triglyceride materials, but can also include residual levels of other components such as mono- and diglycerides. To remain fluid or liquid at temperatures below 25°C, the triglyceride oil contains a minimal amount of glycerides having melting points higher than 25°C so as to limit the solids increase when the triglyceride oil is cooled. It is desirable that the triglyceride oil be chemically stable and resistant to oxidation.

Suitable triglyceride oils can be derived from naturally occurring liquid vegetable oils such as cottonseed oil, soybean oil, safflower oil, corn oil, olive oil, coconut oil, palm kernel oil, peanut oil, rapeseed oil, canola oil (i.e., rapeseed oil low in erucic acid), sesame seed oil, sunflower seed oil, and mixtures thereof. Also suitable are liquid oil fractions obtained from palm oil, lard and tallow by, for example, graining or directed interesterification, followed by separation of the oils. Oils predominating in glycerides of unsaturated acids can need some hydrogenation to maintain flavor, but care should be taken not to greatly increase the amount of glycerides melting above 25°C. When oils are selected which have a larger amount of solids melting between 25° and 40°C than are desirable, it can be necessary to separate out the solids. For example refined and slightly hydrogenated soybean oil is suitable, as well as refined cottonseed oil.

As used herein, the term "triglyceride fat" refers to those triglyceride compositions which are solid or plastic above about 25°C. These solid or plastic fats can be derived from plants or animals or can be edible synthetic fats or oils. For example, animal fats such as lard, tallow, oleo oil, oleo stock, oleo stearin and the like which are solid at room temperature can be utilized. Also, triglyceride oils, e.g. unsaturated vegetable oils, can be converted into plastic fats by partial hydrogenation of the unsaturated double bonds of fatty acid constituents of the oil followed by conventional chilling and crystallization techniques or by proper mixture with sufficient triglycerides which are solid at room temperature to form a rigid interlocking crystalline structure which interferes with the free-flowing properties of the liquid oil. See U.S. Patent 3,355,302 to Purves et al, issued November 28, 1967, and U.S. Patent 3,867,556 to Darragh et al, issued February 18, 1975 (herein incorporated by reference), for further examples of solid or plastic fats.

3. Formulation of the Reduced Calorie Fat Compositions Used Herein

The fat compositions used as a frying medium in the process of the present invention can be formulated by combining the nondigestible fat component and the conventional triglyceride fat or oil component in the desired proportions.

These fat compositions comprise from 70% to 100% nondigestible fat and from 0% to 30% triglyceride fat or oil. Preferably such compositions comprise from 80% to 100% nondigestible fat and from 0% to 20% triglyceride fat or oil. More preferably, such compositions comprise from 90% to 100% nondigestible fat and from 0% to 10% triglyceride fat or oil, and most preferably such compositions comprise 95% to 100% nondigestible fat and from 0% to about 5% triglyceride fat or oil.

4. <u>Physical and Chemical Characteristics of the Reduced Calorie Fat Compositions Used Herein</u>

It has been discovered that for the potato chips prepared by the process herein to have the desired characteristics, the reduced calorie fat compositions used as the frying medium must have certain rheological characteristics. In particular, the reduced calorie fat compositions used in the present invention must have a Waxy/Greasy Thixotropic Area Value at mouth temperature (92°F, 33.3°C) ranging from 25 to 150 kPa/s. Preferably, the reduced calorie fat compositions have a Waxy/Greasy Thixotropic Area Value at mouth temperature ranging from 40 to 140 kPa/s, more preferably from 55 to 130 kPa/s, and most preferably from 70 to 120 kPa/s.

As used herein, the term "Waxy/Greasy Thixotropic Area Value" refers to a rheological measurement of the fat composition that relates to the energy per unit volume required to break down the physical structure of the fat under specific shear conditions. It has been found that this Waxy/Greasy Thixotropic Area Value of fat compositions is correlatable to the waxiness and greasiness impressions for potato chips fried in and containing these compositions. Fat compositions which have the hereinbefore described Waxy/Greasy Thixotropic Area Values will not impart an undesirable sensation of waxiness or greasiness to potato chips which contain these fat compositions at the levels hereinafter described. Waxy/Greasy Thixotropic Area Values for the fat compositions herein can be determined using the procedure described in greater detail in the Analytical Methods section hereinafter.

It should also be noted that the reduced calorie fat compositions, such as those containing fatty acid ester groups, can be characterized using several known prior art measurements. The measurements can include, for example, determination of fatty acid content of such components, ester distributions of such components, and melting point determination by Differential Scanning Calorimetry (DSC). Procedures for making these measurements are described, for example in Young, U.S. Patent 5,085,884, Issued February 4, 1992, incorporated herein by reference.

II. <u>Process Steps</u>

Using the potato and reduced calorie fat materials hereinbefore described, the process of the present invention involves first frying the potato slices in the reduced calorie frying medium to a particular extent, followed by removal from the surface of the fried chips of a certain amount of the reduced calorie fat composition which has been incorporated during the frying step. Each of these two basic steps is described in detail as follows:

A. <u>Frying Step</u>

In a first process step, the potato slices as hereinbefore described are fed into a fryer, preferably a continuous fryer, which may be a single or a multizone fryer. The fryer contains a frying oil which comprises the reduced calorie fat composition of the type hereinbefore described. Means, such as paddle wheels, a submergible conveyor, or both, may be provided to transport the potato slices through the frying oil in a continuous and uniform manner.

The frying oil is maintained at a temperature of from 300°F to 400°F (from 148.9°C to 204.4°C). Preferably, the frying oil is maintained at a temperature of from 330°F to 370°F (from 165.5°C to 187.8°C). The temperature of the frying oil is important for several reasons. First, as the temperature increases, the fryer can process the potato slices to a given moisture content in a shorter amount of time. Shorter frying times result in less fat absorption by the potato slices which can ultimately provide a finished potato chip having a lower fat content. Second, the oil temperature can affect the textural development and flavor generation in the fried snack food. Furthermore, the temperature of the frying oil will affect the stability of the frying oil which is of major importance if the frying oil recovered later in the process is intended to be recycled. (See Neel et al; U.S. Patent 4,933,199; Issued June 12, 1990, incorporated herein by reference, which discloses the recycling of frying oil.) Hence, the optimum temperature of the reduced calorie fat composition would depend on a balance of the above, as well as other, considerations.

In accordance with the present invention, the potato slices reside within the fryer until the slices have been partially fried ("par-fried") to an average moisture content ranging from 2% to 20%, preferably from 4% to 15%, more preferably from 5% to 10%. Par-frying the potato slices to a relatively high moisture content can provide finished potato chips having reduced fat contents compared to potato chips prepared by complete frying of the potato slices. During frying, moisture from the potato slices is replaced proportionally by fat. Most of the moisture from the potato slices is lost and, consequently, most of the fat contained in the finished potato chip is absorbed, during the latter stage of frying. Therefore, if the potato slices are only partially fried so that they still have a relatively high moisture content compared to the finished chip, they will have absorbed less fat. Since only a limited amount of the fat that is absorbed during frying can be effectively removed from the potato chip during post-fry treatments (discussed hereinafter), it is important to minimize the fat that is absorbed during frying to provide finished potato chips having the desired fat contents. The potato slices can be dehydrated during the hereinafter described post-fry treatments to realize the desired moisture content for the finished potato chips. On the other hand, when the potato slices are to be subjected to the steam stripping post-fry treatments hereinafter described, the moisture content should preferably be low enough to provide potato slices having sufficient structure to be vertically aligned without collapsing. Potato slices which are relatively thick or which are rippled can generally acquire sufficient structure to be subjected to steam stripping even when par-fried to relatively high moisture contents. The particular moisture content to which the potato slices should be fried thus depends on the fat content that is desired for the finished potato chip, the post-fry treatment that is to be employed, and the configuration and thickness of the potato slices.

The residence time of the potato slices within the fryer is adjusted so that the desired moisture content is consistently reached. Typical residence times range from 45 seconds to 180 seconds. The specific residence time of the potato slices in the fryer will depend on the desired moisture content for the par-fried potato slices, on the temperature of the frying oil, and on the flow rate of the potato slices through the fryer. The par-fried potato slices will typically have a fat content of from 25% to 40%, preferably from 28% to 35% upon removal from the fryer. Once the desired par-fried moisture content has been reached, the potato slices are removed from the fryer. Procedures for determining both moisture content and fat content of potato slices/chips are set forth hereinafter in the Analytical Methods section.

B. <u>Fat Removal Step</u>

In a second essential process step, immediately after the potato slices are removed from the fryer, some means is employed to remove some amount of the fat composition from the surface of the potato slices. The reduced calorie fat compositions may be removed from the potato slices by any conventional post-fry treatment for the removal of triglyceride fats from potato slices. For example, the fat can be removed from the surface of the chip by steam stripping (see, for example, Neel et al; U.S. Patent 4,933,199; Issued June 12, 1990 and Swedish Patent Application 1,519,049; Published July 26, 1978, both of which are herein incorporated by reference) or by treatment of the chip with a solvent such as supercritical $CO_2$ or hexane to solubilize a portion of the surface and interior fat contained in the chip (see, for example, Goulston; U.S. patent 3,127,271; Issued March 31, 1964 and Kazlas et al; World Patent Application US91/05950 (publication number WO 92/03064); Published March 5, 1992, both of which are herein incorporated by reference). Fat can also be removed from the surface of the chip by immersing the chip in a liquid, e.g. ethanol, displaying a low solubility for the nondigestible fat composition for from about 0.5 to about 5 minutes to physically rinse fat from the surface of the chip. Residual solvent on the chip is then removed in an oven under vacuum.

Steam stripping is an especially preferred way of removing surface fat from the potato slices. When steam stripping is used, the par-fried potato slices are continuously conveyed through a steam stripper. The potato slices are preferably vertically aligned and form a bed having a depth of from 1 to 6 inches (2.5-15.2 centimeters). In this way fat removal from the potato slices is maximized. The steam stripper is operated to provide optimal fat removal from the par-fried potato slices.

The steam stripper comprises an enclosed region wherein superheated steam is forced through the bed of par-fried potato slices at a high velocity to strip the reduced calorie fat composition from the potato slices. The wet bulb temperature in the steam stripper is maintained at from 150°F (65.5°C) to 210°F (98.9°C), preferably from 180°F (82.2°C) to 210°F (98.90°C). The dry bulb temperature in the steam stripper is maintained at from 280°F (137.8°C) to 350°F (176.6°C), preferably from 300°F (148.9°C) to 330°F (165.5°C). It has been found that below a dry bulb temperature of 280°F (137.8°C), the par-fried potato slices will not, with reasonable residence times, have a sufficient amount of fat removed. Steam stripping at a dry bulb temperature of greater than 350°F (176.6°C) will increase the likelihood of producing burnt flavors in the finished product, and so should be avoided.

Superheated steam is directed at the potato slice bed at velocities ranging from 500 to 3000 feet per minute (fpm). Preferably, the velocity of the superheated steam ranges from 1300 to 2500 fpm, most preferably from 1700 to 2200 fpm. The superheated steam may be injected into the steam stripper by any known means such as a directed curtain of superheated steam; by a plurality of spaced-apart, directed nozzles; or by injection of steam into a space nearby the bed of potato slices and utilizing heater and blower means to ensure that the steam is superheated and to direct the superheated steam towards the bed of potato slices. Preferably, the superheated steam is directed downward at the bed of potato slices and the bed is disposed on a porous conveying means.

The potato slices are typically maintained in the steam stripper for a time sufficient to provide finished potato chips having a fat content ranging from 23% to 32%. The residence time to achieve these fat contents is typically from 30 to 180 seconds, preferably from 60 to 120 seconds.

In any event, the amount of the reduced calorie fat composition that is to be removed from the par-fried potato slices is an amount such that the finished potato chips have a fat content ranging from 23% to 32%, preferably from 24% to 30%, more preferably from 24% to 28%, and most preferably from 24% to 27%. Potato chips having these fat levels will typically have moisture contents of from 0% to 4%, preferably from 0% to 3%, and most preferably from 0% to 2%.

It is believed that potato chips which have been fried in the hereinbefore described reduced calorie fat compositions and which have a fat content of less than 23% will not have desirable lubriciousness, e.g., they will be dry. Furthermore, potato chips which have been fried in the hereinbefore described reduced calorie fat compositions and which have a fat content of greater than 32% will have an undesirable greasiness and/or waxiness impression when ingested. However, potato chips which have a fat content ranging from 23% to 32% will have both desirable lubriciousness and acceptable greasiness and waxiness impressions.

III. Potato Chips Prepared According to the Process of the Present Invention

The present invention also relates to potato chips prepared according to the process of the present invention. These potato chips do not impart an undesirable sensation of greasiness or waxiness when chewed and have desirable lubriciousness. The potato chips have fat contents ranging from 23% to 32% and moisture contents ranging from 0% to 4%. The Waxy/Greasy Thixotropic Area Value of the reduced calorie fat composition contained in the finished snack product ranges from 25 to 150 kPa/s.

ANALYTICAL TEST METHODS

A number of parameters used to characterize elements of the present invention are quantified by particular experimental analytical procedures. Each of these procedures is described in detail as follows:

1. Solid Fat Content (SFC) of Polyol Polyesters

Before determining the SFC values, a sample of the polyol polyesters is heated to a temperature of 140°F (60°C) or higher for at least 30 minutes or until the sample is completely melted. The melted sample is then tempered as follows: at 80°F (26.7°C) for 15 minutes; at 32°F (0°C) for 15 minutes; at 80°F (26.7°C) for 30 minutes; at 32°F (0°C) for 15 minutes. After tempering the SFC values of the sample at temperatures of 50°F (10°C), 70°F (21.1°C), 80°F (26.7°C), 92°F (33.3°C), and 98.6°F (37°C) are determined by pulsed nuclear magnetic resonance (PNMR) after equilibration for 30 minutes at each temperature. The slope of the SFC profile in % solids/°F is calculated by subtracting the SFC value at 70°F from the SFC value at 98.6°F and then dividing by 28.6. The method for determining SFC values by PNMR is described in J. Amer. Oil Chem. Soc., Vol . 55 (1978). pp. 328-31 (herein incorporated reference, and A.O.A.C. Official Method Cd. 16-81, Official Methods and Recommended Practices of The American Oil Chemists Society, 3rd Ed., 1987, (herein incorporated by reference).

2. Polyol Polyester Liquid/Solid Stability Measurement

A sample of the polyesters is heated in a hot water bath at greater than 190°F (87.8°C) until it completely melts and is then thoroughly mixed. The sample is then poured to capacity into 4.4 ml. centrifuge tubes at 100°F (37.8°C). The sample is then allowed to recrystallize for 24 hours at 100°F (37.8°C) in a constant temperature room. The sample is then centrifuged at 60,000 rpm in a Beckman Model SW60 rotor for one hour at 100°F (37.8°C). The maximum force on the sample (i.e. at the bottom of the tube) is 485,000 g's. The percent liquid separated is then measured by comparing the relative heights of the liquid and solid phases. The height of the liquid phase is measured using a metric ruler and recorded in mm. The height of the sample is measure in the same way and recorded in mm. Two (2) mm (correction for curvature in the tube bottom) is added to the straight wall height to obtain "total height". Liquid/solid stability (%) = 100 x (total sample height - liquid oil height) / total sample height .

3. Waxy/Greasy Thixotropic Area Value of Reduced Calorie Fat Compositions

The reduced calorie fat compositions used in the present invention exhibit certain rheological characteristics which correlate to waxy or greasy mouthfeel imparted by potato chips fried in these fat compositions. This method is used to determine the Waxy/Greasy Thixotropic Area Value of a reduced calorie fat composition wherein the solid component has crystallized via the cooling profile typical of conventional potato chips.

In this method, shear stress is measured as a function of shear rate between $0s^{-1}$ and $800s^{-1}$ using a cone and plate rheometer. The shear rate is first increased from 0 to $800s^{-1}$ over 2 minutes and then decreased back to $0s^{-1}$ over 2 minutes at 92°F (33.3°C). The Waxy/Greasy Thixotropic Area is the area of the hysteresis between the ascending and descending flow curves.

A. Calibration of Recorder

A cooling profile template is placed on an X-Y recorder (Houston Instruments Model 200) so that time is the X-axis. In this case, the cooling profile used is an approximation of the cooling profile of a conventional potato chip and is typical of all deep fat fried salted snack products. The recorder switches are set to the parameters described on the template and then calibrated in the following manner:

1. Calibrator set to 50 mv.
2. ZERO potentiometer adjusted until pen indicates 50°F on recorder.
3. Calibrator is set to 190 mv.
4. SPAN potentiometer is adjusted until pen indicates 190°F on recorder.

The above steps 1-4 are repeated until the pen indicates the proper temperature without adjustment. The strip chart recorder is then attached to the analog input of a thermocouple reader (Omega #199A).

B. Sample Preparation

A sample of the reduced calorie fat composition is heated until completely melted and then thoroughly mixed. Eight (8) grams of the sample are then weighed into a weighing pan (VWR Scientific #25433-008). The thermocouple (Omega #5TC-T-36-36 0.05 inch type T) is submerged in the sample in approximately the center of the pan, care being taken to keep the thermocouple tip from touching the bottom of the pan. The pan is then placed on a hot plate and heated to approximately 240°F. When this temperature is reached, the recorder is started and the pan is removed from the hot plate and placed on top of a lab bench. The temperature of the sample is controlled so as to precisely track the cooling curve shown on the template. This is achieved by providing gentle agitation to the pan to accelerate cooling and removal of the pan from the lab bench top to slow the cooling rate. This cooling process takes approximately 3 minutes to complete, after which time the thermocouple is removed. The reduced calorie fat sample is then tempered for 7 days at approximately 70°F prior to measurement of the thixotropic area.

C. Rheometer Setup

The rheometer (Contraves Rheomat 115A with 2, 5 and 7 cm cones (2° angle) is interfaced with a computer and set up under the following conditions:

Program Setup

| Sensitivity | 1.0 | |
| First minimum shear rate (s-1) | 0.000 | |
| Time at minimum shear rate (s) | 120.0 | Hold to allow sample temperature equilibration |
| Ascending ramp time (s) | 120.0 | 2 minute scan 0 to 800 s-1 |
| Maximum shear rate (s-1) | 800.000 | |
| Hold time (s) | 1.0 | |
| Second minimum shear rate (s-1) | 0.000 | |
| Descending ramp time (s) | 120.0 | 2 minute scan 800 to 0 s-1 |

Data Output Conditions

Printout of measured points 1 to 15
Calculate Waxy/Greasy Thixotropic Area Value
Printout results

D. Cone Selection

Using a CP-8 (2 cm) cone, measure the Waxy/Greasy Thixotropic Area of the sample according to this method. If the Waxy/Greasy Thixotropic Area Value is greater than 200 kPa/s, maximum accuracy has been attained. If the Waxy/Greasy Thixotropic Area Value is between 50 and 200 kPa/s, the method should be repeated using a CP-6 (5 cm) cone to obtain maximum accuracy. If the Waxy/Greasy Thixotropic Area Value is between 0 and 50 kPa/s, the method should be repeated using the CP-10 (7 cm) cone to obtain maximum accuracy.

E. Torque Calibration

The rheometer is calibrated for torque by lifting the measuring head away from the plate and then adjusting the knob on the front panel of the rheometer until the torque meter on the left of the adjustment knob reads "+000" with the "+" flashing.

F. Temperature Calibration

The temperature of the sample during analysis should be maintained at 33.3±0.1°C. After setting the recirculating bath to achieve approximately 33.3°C, the plate temperature is checked by applying a small amount of oil to the plate, positioning the cone onto the plate, inserting the thermocouple probe into the gap between the cone and the plate, and then allowing a few minutes for the temperature to equilibrate. The temperature is then read with the bath temperature being adjusted until the plate temperature is 33.3±0.1°C.

G. Sample Analysis

Approximately 4 grams of the reduced calorie fat sample is applied to the rheometer plate. The cone assembly is then lowered slowly onto the sample and seated firmly on the plate. At this point, the flow curve program is initiated. Upon completion of the run, a report is printed out listing the first 15 data points on the flow curve and the calculated thixotropic area. The Waxy/Greasy Thixotropic Area is the hysteresis area between the ascending and descending flow curves and is reported as the Waxy/Greasy Thixotropic Area Value (Kpascals/sec.).

4. Fat Content of Potato Slices or Potato Chips

The fat content of potato slices or potato chips can be determined by soxhlet extraction as follows:

Equipment/Reagents:

Soxtec HT6 Extractor, water bath, hot oil bath, extraction beaker, extraction thimble, vacuum drying oven, nitrogen purging gas, methylene chloride, boiling stones, glass wool

Procedure:

1. Weigh the extraction thimble (to four places 0.0001) and record as tare.
2. Load approximately 8-12 grams of ground chip sample into thimble and record as gross weight (to 0.0001).
3. Place glass wool on top of chip sample in thimble to contain the chips in the thimble.
4. Place 2-3 boiling stones into extraction beaker, weigh, and record weight as tare (to 0.0001).
5. Add 50 ml of methylene chloride to extraction beaker.
6. Load extraction beaker and the thimble containing the chip sample into extractor.
7. Set oil bath at 110°C and water bath at 28.3°C and allow to equilibrate.
8. Lower thimble into extraction beaker and allow to boil for 60 minutes, with the condenser pet cock opened.
9. Raise thimble out of extraction beaker and rinse for 60 minutes.
10. Turn the condenser's pet cock to closed position, purge with nitrogen and allow methylene chloride to evaporate for 60 minutes.
11. Place extraction beaker into vacuum oven at 120°C for 30 minutes.
12. Allow extraction beaker to cool to room temperature, weigh (to 0.0001) and record as final weight (weight beaker, boiling stones and extracted fat).

Calculations:

1. Chip Sample Weight = gross wt (step 2) - tare wt (step 1)
2. Extracted Fat wt = final wt (step 12) - tare wt (step 4)
3. Fat Content(%)=[Extracted Fat weight/chip sample weight] x 100

5. Moisture Content of Potato Chips or Potato Slices

The moisture content of a potato chip or potato slice can be determined by a forced air oven volatiles method as follows:

Equipment:

Forced air oven, aluminum tins, Cabinet-type desiccator

Procedure:

1. Weigh tin and lid to 0.0001 grams and record weight as tare weight
2. Place 2-3 gram ground chip sample into tin, weigh to 0.0001 grams and record as gross weight
3. Set oven temperature to 105°C
4. Place tin containing the chip sample in oven for 1 hour, uncovered
5. Remove tin containing the sample from the oven, cover the tin, and place in desiccator until cooled to room temperature
6. Weigh tin, lid and dried sample to 0.0001 grams and record as final dried weight

Calculations:

1. Sample weight = gross wt. - tare wt.
2. Final weight = weight recorded in step 6
3. Moisture Content (%) = [(gross wt - final wt.)/sample wt] x 100

EXAMPLES

Example 1

Norchip variety potatoes with a specific gravity of 1.09 are sliced to a thickness of about 1.4 mm (0.055 inches.) The potato slices are then fed into a continuous fryer, such as an Industrial Combustion Services continuous fryer, at a rate of about 102 kg/hr (225 lbs/hr). The fryer-heat exchanger system is charged with approximately 190 kg (420 lbs) of frying oil. The frying oil comprises 100% of a sucrose polyester blend comprising about 8% solid nondigestible particles and about 92% liquid cottonseed sucrose polyester. The solid nondigestible particles are formed from sucrose polyesters in which the ester groups are formed from fatty acids derived from sunflower oil and $C_{22}$ saturated fatty acids. The liquid and solid sucrose polyesters have the following attributes:

11

| Fatty Acid Composition | Solid Sucrose Polyester (%) | Liquid Sucrose Polyester (%) |
|---|---|---|
| $C_{14}$ | --- | 0.5 |
| $C_{16}$ | 1.2 | 20.3 |
| $C_{18:0}$ | 4.6 | 6.2 |
| $C_{18:1}$ | 3.7 | 37.3 |
| $C_{18:2}$ | 10.9 | 34.2 |
| $C_{18:3}$ | --- | 0.3 |
| $C_{20}$ | 4.6 | 0.3 |
| $C_{22:1}$ | 0.2 | --- |
| $C_{22:0}$ | 71.7 | --- |
| $C_{24}$ | 2.8 | --- |
| Other | 0.4 | 0.9 |
| Ester Distribution | | |
| % Octa | 71.6 | 74.6 |
| % Hepta | 28.2 | 25.0 |
| % Hexa | 0.2 | <0.1 |
| % Penta | 0.1 | <0.1 |
| % Lower | <0.1 | <0.1 |

The frying oil has a Waxy/Greasy Thixotropic Area Value of 115 kPa/s. The oil enters the fryer at a temperature of 177°C (350°F) and exits at approximately 165°C (330°F).

The potato slices are fried for about 90 seconds and then removed from the fryer. Upon removal from the fryer, the partially fried potato slices, which have a fat content of about 33% and a moisture content of about 7%, are immediately passed through a steam stripper (such as a Heat & Control steam stripper). The residence time of the potato slices in the steam stripper is about 120 seconds, with the following process conditions:

| | |
|---|---|
| Dry Bulb Temperature | 149°C (300°F) |
| Wet Bulb Temperature | 82°C (180°F) |
| Steam Velocity | 660 cm/sec. (1300 fpm) |

The finished product flow rate is approximately 29.4 kg/hour (65 lbs/hour). Upon exit from the steam stripper the potato chips have the following attributes:

| | |
|---|---|
| Fat Content | 27.0% |
| Moisture Content | 1.4% |

Example 2

Norchip variety potatoes with a specific gravity of 1.09 are sliced to a thickness of about 1.5 mm (0.060 inches.) The potato slices are then fed into a continuous fryer at a rate of approximately 102 kg/hr (225 lbs/hr). The fryer-heat exchanger system is charged with approximately 190 kg (420 lbs) of the frying oil. The frying oil comprises 100% of a sucrose polyester blend comprising about 6% of the solid sucrose polyester described in Example 1 and about 94% of the liquid sucrose polyester described in Example 1. The Waxy/Greasy Thixotropic Area Value of the frying oil is 81 kPa/s. The oil enters the fryer at a temperature of 177°C (350°F) and exits at approximately (165°C) (330°F).

The potato slices are fried for about 80 seconds and then removed from the fryer. Upon removal from the fryer, the partially fried potato slices, which have a fat content of about 29% and a moisture content of about 16%, are immediately passed through a steam stripper. The residence time of the potato slices in the steam stripper is about 120 seconds, with the following process conditions:

| Dry Bulb Temperature | 160°C (320°F) |
|---|---|
| Wet Bulb Temperature | 93,3% (200°F) |
| Steam Velocity | 792 cm/sec. (1560 fpm) |

The finished product flow rate is approximately 29.4 kg/hour (65 lbs/hour). Upon exit from the steam stripper the potato chips have the following attributes:

| Fat Content | 23.8% |
|---|---|
| Moisture Content | 2.3%. |

Example 3

Norchip variety potatoes with a specific gravity of 1.08 are sliced to a thickness of about 1.4 mm (0.055 inches). The potato slices are then feed into a continuous fryer at a rate of approximately 102 kg/hr (225 lbs/hr). The fryer-heat exchanger system is charged with approximately 190 kg (420 lbs) of frying oil comprising 75% of the frying oil described in Example 1 and and 25% of a cottonseed triglyceride oil. The Waxy/Greasy Thixotropic Area Value of the frying oil is 35kPa/s. The oil enters the fryer at a temperature of 177°C (350°F) and exits at approximately 165°C (330°F.)

The potato slices are fried for about 80 seconds and then removed from the fryer. Upon removal from the fryer, the partially fried potato slices, which have a fat content of about 33% and a moisture content of about 7%, are immediately passed through a steam stripper. The residence time of the potato slices in the steam stripper is about 120 seconds, with the following process conditions:

| Dry Bulb Temperature | 154°C (310°F) |
|---|---|
| Wet Bulb Temperature | 82°C (180°F) |
| Steam Velocity | 660 cm/sec (1300 fpm) |

The finished product flow rate is approximately 29,4 kg/hour (65 lbs/hour). Upon exit from the steam stripper, the potato chips have the following attributes:

| Fat Content | 31.9% |
|---|---|
| Percent Moisture | 1.36% |

Example 4

Norchip variety potatoes with a specific gravity of 1.094 are sliced to a thickness of about 1.37 mm (0.054 inches). The potato slices are then fed into a continuous fryer at a rate of approximately 102 kg/hr (225 lbs/hr). The fryer-heat exchanger system is charged with approximately 190 kg (420 lbs) of the frying oil described in Example 2. The Waxy/Greasy Thixotropic Area Value of the frying oil is 81 kPa/s. The oil enters the fryer at a temperature of 177°C (350°F) and exits at approximately 165°C (330°F).

The potato slices are fried for about 110 seconds and then removed from the fryer. Upon exit from the fryer, the partially fried potato slices which have a fat content of about 33% and a moisture content of about 3.5% are passed immediately through a steam stripper. The residence time in the steam stripper is about 120 seconds with the following process conditions:

| Dry Bulb Temperature | 163°C (325°F) |
| Wet Bulb Temperature | 82°C (180°F) |
| Steam Velocity | 924 cm/sec (1820 fpm) |

The finished product flow rate is approximately 29,4 kg/hour (65 lbs/hr). Upon exit from the steam stripper the potato chips have the following attributes:

| Fat Content | 28% |
| Moisture Content | 1.0% |

**Claims**

1. A process for preparing reduced calorie potato chips having desirably low greasiness and waxiness with acceptable lubriciousness upon mastication, which process comprises:

   A) frying raw potato slices to a moisture content of from 2% to 20% under conditions suitable to incorporate into said potato slices a reduced calorie fat composition characterized by Waxy/Greasy Thixotropic Area Value of from 25 kPa/s to 150 kPa/s, preferably from 40 kPa/s to 140 kPa/s, which fat composition is characterized in that it comprises:

   i) from 70% to 100%, preferably from 80% to 100%, of a nondigestible fat component; and
   ii) from 0% to 30%, preferably from 0% to 20%, of a triglyceride fat or oil component;
   said nondigestible fat characterized in that it comprises:

   a) a liquid nondigestible oil; and
   b) nondigestible solid particles of polyol polyester characterized by a thickness of 1 micron or less dispersed in said oil in an amount sufficient to control passive oil loss upon the ingestion of the reduced calorie fat composition;

   said nondigestible fat component further characterized by a Solid Fat Content profile slope between 21.1°C and 37°C of from 0 to -1.26 % solids/°C; and

   B) removing from the surface of said fried potato slices a portion of the reduced calorie fat composition incorporated in step A such that the resulting finished potato chips have a fat content ranging from 23% to 32%.

2. A process according to Claim 1 wherein the moisture content of the finished potato chip ranges from 0% to 4%.

3. A process according to Claim 2 wherein the reduced calorie fat composition is removed from the surface of said potato slices by means of post-fry treatment of the fried potato slices, wherein the post-fry treatment is selected from the group of steam stripping, treating the chips with a solvent and immersing the chips in a liquid displaying low solubility for the low calorie fat composition

4. A process according to Claim 3 wherein the nondigestible fat component of the reduced calorie fat composition comprises:

   a) from 80% to 99% of the liquid nondigestible oil; and
   b) from 1% to 20% of the nondigestible solid particles; said nondigestible fat component having a Solid Fat Content profile slope between 70°C and 37°C of from 0 to -0.2%solids/°C.

5. A process according to Claim 4 wherein the liquid nondigestible oil is a liquid sucrose polyester.

6. A process according to Claim 5 wherein the reduced calorie fat composition is removed by steam stripping the fried potato slices.

7. A process according to Claim 6 wherein the wet bulb temperature of the steam stripper ranges from 65.5°C to 98.9°C, the dry bulb temperature ranges from 137.8°C and 176.6°C, the steam flow ranges from 36.8 to 70.8 meters$^3$/minute, and wherein the residence time of the potato slices within the steam stripper is from 45 to 180 seconds.

8. A process according to Claim 7 wherein a portion of the reduced calorie fat composition is removed from the fried potato slices such that the finished potato chips have a fat content of from 24% to 30%.

9. A process for preparing reduced calorie potato chips having desirably low greasiness and acceptable lubriciousness upon mastication, which process is characterized in that it comprises:

   A) frying raw potato slices to a moisture content of from 4% to 15% under conditions suitable to incorporate into said potato slices a reduced calorie fat composition having a Waxy/Greasy Thixotropic Area Value ranging from 55kPa/s to 130 kPa/s, which fat composition comprises:

   i) from 80% to 100% or a nondigestible fat component; and
   ii) from 0% to 20% of a triglyceride fat or oil component;
   said nondigestible fat component characterized in that it comprises:

   a) from 91% to 99% of a liquid sucrose polyester; and
   b) from 1 % to 9% of nondigestible solid particles of polyol polyester having a thickness of 0.1 micron or less;

   said nondigestible fat component having a Solid Fat Content between 21.1°C and 37°C of from 0 to -0.2 %solids/°C; and

   B) steam stripping the fried potato slices for from 45 to 180 seconds at a wet bulb temperature of from 82.2°C to about 98.8°C, a dry bulb temperature of from about 148.9°C to about 165.5°C and a steam flow of from 48.1 meters$^3$/minute to 62.3 meters$^3$/minute to provide finished potato chips having a fat content of from 24% to 28%.

10. A potato chip prepared according to the process of Claim 1 or Claim 9.

**Patentansprüche**

1. Verfahren zur Herstellung von kalorienarmen Kartoffelchips, welche eine wünschenswerte geringe Fettigkeit und Wachsartigkeit mit annehmbarem Gleitvermögen beim Kauen aufweisen, welches Verfahren:

   A) das Fritieren roher Kartoffelscheiben bis zu einem Feuchtigkeitsgehalt von 2% bis 20% unter Bedingungen, welche zur Einverleibung einer kalorienarmen Fettzusammensetzung in die genannten Kartoffelscheiben geeignet sind, welche Fettzusammensetzung durch Wachs/-Fett-Thixotropieflächenwerte von 25 kPa/s bis 150 kPa/s, vorzugsweise von 40 kPa/s bis 140 kPa/s gekennzeichnet ist, welche Fettzusammensetzung dadurch gekennzeichnet ist, daß sie:

i) 70% bis 100%, vorzugsweise 80% bis 100% einer unverdaulichen Fettkomponente und

ii) 0% bis 30%, vorzugsweise 0% bis 20% einer Triglyceridfett- oder -ölkomponente enthält; welches unverdauliche Fett dadurch gekennzeichnet ist, daß es:

a) ein flüssiges unverdauliches Öl und

b) unverdauliche feste Polyolpolyesterteilchen enthält, welche durch eine Stärke von 1 μm oder weniger gekennzeichnet sind, die in dem genannten Öl in einer ausreichenden Menge dispergiert sind, um den passiven Ölverlust bei der Verdauung der kalorienarmen Fettzusammensetzung zu regulieren;

welche unverdauliche Fettkomponente ferner durch einen Anstieg im Festfettgehaltprofil von 21,1°C bis 37°C von 0 bis -1,26% Feststoffe/°C gekennzeichnet ist; und

B) das Entfernen von einem Teil der im Schritt A einverleibten kalorienarmen Fettzusammensetzung von der Oberfläche der genannten fritierten Kartoffelscheiben umfaßt, sodaß die entstehenden fertigen Kartoffelscheiben einen Fettgehalt von 23% bis 32% besitzen.

2. Verfahren nach Anspruch 1, worin der Feuchtigkeitsgehalt der fertigen Kartoffelchips von 0% bis 4% reicht.

3. Verfahren nach Anspruch 2, worin die kalorienarme Fettzusammensetzung von der Oberfläche der genannten Kartoffelscheiben mittels einer nach dem Fritieren stattfindenden Behandlung der fritierten Kartoffelscheiben entfernt wird, wobei die nach dem Fritieren erfolgende Behandlung von der aus das Dampfstrippen, das Behandeln der Chips mit einem Lösungsmittel und das Eintauchen der Chips in eine Flüssigkeit, welche eine geringe Löslichkeit für die kalorienarme Fettzusammensetzung zeigt, bestehenden Gruppe ausgewählt ist.

4. Verfahren nach Anspruch 3, worin die unverdauliche Fettkomponente der kalorienarmen Fettzusammensetzung a) 80% bis 99% des flüssigen unverdaulichen Öls und b) 1% bis 20% der unverdaulichen festen Teilchen umfaßt, welche unverdauliche Fettkomponente einen Anstieg des Festfettgehaltprofils von 21,1°C bis 37°C von 0 bis - 0,2% Feststoffe/°C aufweist.

5. Verfahren nach Anspruch 4, worin das flüssige unverdauliche Öl ein flüssiger Saccharosepolyester ist.

6. Verfahren nach Anspruch 5, worin die kalorienarme Fettzusammensetzung durch Dampfstrippen von den fritierten Kartoffelscheiben entfernt wird.

7. Verfahren nach Anspruch 6, worin die Naßkolbentemperatur des Dampfstrippers von 65,5°C bis 98,9°C beträgt, die Trockenkolbentemperatur von 137,8°C bis 176,6°C beträgt, der Dampfdurchfluß von 36,8 bis 70,8 m$^3$/min beträgt und worin die Verweilzeit der Kartoffelscheiben im Dampfstripper von 45 bis 180 s beträgt.

8. Verfahren nach Anspruch 7, worin ein Teil der kalorienarmen Fettzusammensetzung von den fritierten Kartoffelscheiben entfernt wird, sodaß die fertigen Kartoffelchips einen Fettgehalt von 24% bis 30% aufweisen.

9. Verfahren zur Herstellung von kalorienarmen Kartoffelchips, welche eine wünschenswerte geringe Fettigkeit und Wachsartigkeit mit annehmbarem Gleitvermögen beim Kauen aufweisen, welches Verfahren:

A) das Fritieren roher Kartoffelscheiben bis zu einem Feuchtigkeitsgehalt von 4% bis 15% unter Bedingungen, welche zur Einverleibung einer kalorienarmen Fettzusammensetzung in die genannten Kartoffelscheiben geeignet ist, welche Fettzusammensetzung Wachs/Fett-Thixotropieflächenwerte von 55 kPa/s bis 130 kPa/s aufweist, welche Fettzusammensetzung:

i) 80% bis 100% einer unverdaulichen Fettkomponente und

ii) 0% bis 20% einer Triglyceridfett- oder -ölkomponente enthält; welche unverdauliche Fettkomponente dadurch gekennzeichnet ist, daß sie:

a) 91% bis 99% von einem unverdaulichen flüssigen Saccharosepolyester und

b) 1% bis 9% unverdauliche feste Polyolpolyesterteilchen mit einer Stärke von 0,1 μm oder weniger enthält;

welche unverdauliche Fettkomponente einen Anstieg im Festfettgehaltprofil zwischen 21,1°C bis 37°C von 0 bis -0,2% Feststoffe/°C besitzt; und

B) das Dampfstrippen der fritierten Kartoffelscheiben während 45 bis 180 s bei einer Naßkolbentemperatur von 82,2°C bis etwa 98,8°C, einer Trockenkolbentemperatur von etwa 148,9°C bis etwa 165,5°C und einem Dampfdurchfluß von 48,1 bis 62,3 m$^3$/min umfaßt, um fertige Kartoffelchips mit einem Fettgehalt von 24% bis 28% zu erhalten.

**10.** Kartoffelchips, hergestellt gemäß dem Verfahren nach Anspruch 1 oder Anspruch 9.

**Revendications**

**1.** Procédé pour préparer des chips de pommes de terre à calories réduites ayant un faible caractère gras et cireux, avec une onctuosité acceptable lors de la mastication, ce procédé comprenant les étapes consistant :

A) à faire frire des tranches de pommes de terre brutes jusqu'à une teneur en humidité de 2 % à 20 % dans des conditions appropriées pour incorporer dans lesdites tranches de pommes de terre une composition de graisse à calories réduites caractérisée par une valeur d'aire thixotropique cire/graisse de 25 kPa.s à 150 kPa.s, de préférence de 40 kPa.s à 140 kPa.s, cette composition de graisse étant caractérisée en ce qu'elle comprend :

i) de 70 % à 100 %, de préférence de 80% à 100%, d'un constituant de graisse non digestible ; et
ii) de 0 % à 30 %, de préférence de 0 % à 20 %, d'un constituant de graisse ou d'huile à triglycérides ; ladite graisse non digestible étant caractérisée en ce qu'elle comprend :

a) une huile liquide non digestible ; et
b) des particules de polyester de polyol solides non digestibles caractérisées par une épaisseur de 1 μm ou moins, dispersées dans ladite huile en une quantité suffisante pour limiter la perte d'huile passive lors de l'ingestion de la composition de graisse à calories réduites ;

ledit constituant de graisse non digestible étant en outre caractérisé par une pente de profil de teneur en graisses solides entre 21,1 °C et 37 °C de 0 à -1,26 % de matières solides/°C ; et

B) à éliminer de la surface desdites tranches de pommes de terre frites une partie de la composition de graisse à calories réduites incorporée dans l'étape A, de sorte que les chips de pommes de terre finies résultantes ont une teneur en graisse allant de 23 % à 32 %.

**2.** Procédé selon la revendication 1, dans lequel la teneur en humidité des chips de pommes de terre finies va de 0 % à 4 %.

**3.** Procédé selon la revendication 2, dans lequel la composition de graisse à calories réduites est éliminée de la surface desdites tranches de pommes de terre au moyen d'un traitement après la friture des tranches de pommes de terre frites, dans lequel le traitement après la friture est choisi dans le groupe de l'entraînement à la vapeur d'eau, du traitement des chips avec un solvant et de l'immersion des chips dans un liquide présentant une faible solubilité pour la composition de graisse peu calorique.

**4.** Procédé selon la revendication 3, dans lequel le constituant de graisse non digestible de la composition de graisse à calories réduites comprend :

a) de 80 % à 99 % de l'huile liquide non digestible ; et
b) de 1 % à 20 % des particules solides non digestibles ; ledit constituant de graisse non digestible ayant une pente de profil de teneur en graisse solide entre 70 °C et 37 °C de 0 à -0,2 % de matières solides/°C.

**5.** Procédé selon la revendication 4, dans lequel l'huile non digestible liquide est un polyester de saccharose liquide.

**6.** Procédé selon la revendication 5, dans lequel la composition de graisse à calories réduites est éliminée par entraînement à la vapeur d'eau des tranches de pommes de terre frites.

**7.** Procédé selon la revendication 6, dans lequel la température au thermomètre mouillé de l'appareil d'entraînement à la vapeur d'eau va de 65,5 °C à 98,9 °C, la température au thermomètre sec va de 137,8 °C à 176,6 °C, le débit de vapeur d'eau va de 36,8 à 70,8 m$^3$/minute, et dans lequel le temps de séjour des tranches de pommes de terre dans l'appareil d'entraînement à la vapeur d'eau est de 45 à 180 secondes.

8. Procédé selon la revendication 7, dans lequel une partie de la composition de graisse à calories réduites est éliminée des tranches de pommes de terre frites de sorte que les chips de pommes de terre finies ont une teneur en graisse de 24 % à 30 %.

9. Procédé pour préparer des chips de pommes de terre à calories réduites ayant un faible caractère gras souhaitable et une onctuosité acceptable lors de la mastication, ce procédé étant caractérisé en ce qu'il comprend les étapes consistant :

A) à faire frire des tranches de pommes de terre brutes jusqu'à une teneur en humidité de 4 % à 15 % dans des conditions appropriées pour incorporer dans lesdites tranches de pommes de terre une composition de graisse à calories réduites ayant une valeur d'aire thixotropique cire/graisse de 55 kPa.s à 130 kPa.s, cette composition de graisse comprenant :

i) de 80 % à 100 % d'un constituant de graisse non digestible ; et
ii) de 0 % à 20 % d'un constituant de graisse ou d'huile à triglycérides ;
ledit constituant de graisse non digestible étant caractérisé en ce qu'il comprend :

a) de 91 % à 99 % d'un polyester de saccharose liquide ; et
b) de 1 % à 9 % de particules de polyester de polyol solides non digestibles ayant une épaisseur de 0,1 μm ou moins ;

ledit constituant de graisse non digestible ayant une teneur en graisses solides entre 21,1 °C et 37 °C de 0 à -0,2 % de matières solides/°C ; et

B) à entraîner à la vapeur d'eau les tranches de pommes de terre frites pendant 45 à 180 s à une température au thermomètre mouillé de 82,2 °C à environ 98,8 °C, une température au thermomètre sec d'environ 148,9 °C à environ 165,5 °C et un débit de vapeur d'eau de 48,1 m$^3$/minute à 62,3 m$^3$/minute pour fournir des chips de pommes de terre finies ayant une teneur en graisse de 24 % à 28 %.

10. Chips de pommes de terre préparées selon le procédé de la revendication 1 ou de la revendication 9.